(19) Europäisches Patentamt
European Patent Office
Office européen des brevets

(11) **EP 2 679 982 B1**

(12) **EUROPÄISCHE PATENTSCHRIFT**

(45) Veröffentlichungstag und Bekanntmachung des Hinweises auf die Patenterteilung:
**06.05.2020   Patentblatt 2020/19**

(21) Anmeldenummer: **12174144.1**

(22) Anmeldetag: **28.06.2012**

(51) Int Cl.:
**G01N 21/3504** *(2014.01)*       **G01N 21/27** *(2006.01)*

(54) **Sensorsystem und Verfahren zur Vermessung der Übertragungseigenschaften einer Übertragungsstrecke eines Messsystems zwischen einem Sender und einem Empfänger**

Method and sensor system for measuring the transmission properties of a transmission path of a measuring system between transmitter and recipient

Système de capteur et procédé destinés à la mesure des propriétés de transmission d'une voie de transmission d'un système de mesure entre un émetteur et un récepteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.01.2014   Patentblatt 2014/01**

(73) Patentinhaber: **Elmos Semiconductor Aktiengesellschaft**
**44227 Dortmund (DE)**

(72) Erfinder:
• **Burchard, Bernd**
**45276 Essen (DE)**

• **Hill, Uwe**
**75196 Remchingen (DE)**

(74) Vertreter: **Durm Patentanwälte PartG mbB**
**Patentanwälte**
**Moltkestrasse 45**
**76133 Karlsruhe (DE)**

(56) Entgegenhaltungen:
**EP-A1- 2 631 674       EP-A2- 0 318 752**
**DE-A1- 10 221 937       US-A- 5 774 213**

**Beschreibung**

Die vorliegende Erfindung betrifft ein Sensorsystem mit wenigstens einem Sender und einem Empfänger zur Vermessung der Übertragungseigenschaften einer Übertragungsstrecke zwischen einem Sender und dem Empfänger. Der Sender sendet ein Sendesignal in die Übertragungsstrecke, das nach Durchgang durch mindestens einen Teil der ersten Übertragungsstrecke von dem Empfänger detektiert wird. Der Empfänger empfängt das Sendesignal und bildet daraus ein Empfängerausgangssignal, das in einer Verarbeitungseinheit weiterverarbeitet wird. Aus dem Empfängerausgangssignal werden Informationen über die Eigenschaften der ersten Übertragungsstrecke gewonnen. Beispielsweise kann die Anwesenheit eines Objekts oder bestimmte Eigenschaften eines Objekts erkannt werden.

Ein derartiges optisches Sensorsystem kann durch Störstrahler, wie beispielsweise Leuchtstoffröhren oder die Sonne gestört werden. Diese schmalbandigen Störer können die Messergebnisse verfälschen, wenn ihre Störstrahlung im Bereich des Sendesignals liegt. Wenn der Störer und seine Störstrahlung bekannt sind, kann versucht werden, die Arbeitsfrequenz des Sendesignals außerhalb des Bereichs der Störer zu legen. Ist dies nicht möglich, weil der Störer nicht bekannt oder nur sporadisch auftaucht, wird in bekannten Ansätzen versucht, durch ein sogenanntes Frequenzhopping eine Arbeitsfrequenz zu suchen, bei der ein ungestörter Betrieb des Sensorsystems möglich ist. Diese Verfahren sind für manche Anwendungsgebiete jedoch nicht oder nur unzureichend geeignet.

Es besteht deshalb ein Bedarf im Stand der Technik, ein Sensorsystem auszubilden, das eine hohe Störfestigkeit aufweist.

Gelöst wird die vorliegende Aufgabe durch ein Sensorsystem mit den Merkmalen des Anspruchs 1 sowie durch ein Verfahren zur Vermessung der Übertragungseigenschaften einer ersten Übertragungsstrecke mit den Merkmalen des Anspruchs 8. Besondere Ausgestaltungen der jeweiligen Gegenstände der Ansprüche 1 und 8 sind in den zugeordneten Unteransprüchen definiert.

Im Rahmen der Erfindung wurde erkannt, dass zur Vermessung der Übertragungseigenschaften einer Übertragungsstrecke bisher stets ein moduliertes Signal verwendet wird. Das modulierte Signal umfasst eine in der Regel optische Trägerwelle mit einer Trägerfrequenz, die undefiniert, jedoch jedenfalls breitbandig ist. Auf dieses optische Trägersignal wird ein Speisesignal des Senders aufmoduliert. Dabei bildet das Speisesignal die Einhüllende des modulierten Sendesignals. Es wurde erkannt, dass im Stand der Technik hierzu ausschließlich Speisesignale verwendet werden, die schmalbandig oder monofrequent sind. Somit ergibt sich die Einhüllende des übertragenden Signals durch das schmalbandige oder monofrequente Speisesignal. Die Modulationsfrequenz ist folglich ebenfalls schmalbandig oder monofrequent.

Das erfindungsgemäße Sensorsystem wählt einen vollständig anderen Ansatz. Der Sender gemäß des Oberbegriffs des Anspruchs 1 sendet wenigstens einen Teil eines Spektrums elektromagnetischer Strahlung in wenigstens zwei vorgegebenen Wellenlängen-Teilbereichen aus. Die Aussendung der elektromagnetischen Strahlung erfolgt als Trägerwelle. Dabei ist die Aussendeintensität der mindestens zwei Wellenlängen-Teilbereiche mittels eines Signals geregelt. Die Aussendeintensitäten der Wellenlängen-Teilbereiche werden gegenläufig derart geregelt, dass Strahlung eines der mindestens zwei Wellenlängen-Teilbereiche ausgesendet werden kann. Insbesondere wird vorwiegend jeweils Strahlung in nur einem der mindestens zwei Wellenlängen-Teilbereiche ausgesendet. Es erfolgt also bevorzugt ein Umschalten zwischen den beiden Wellenlängen-Teilbereichen. Besonders bevorzugt entsprechen die Wellenlängen-Teilbereiche je einer Farbe, die bevorzugt im optisch sichtbaren Bereich oder im nicht sichtbaren Bereich z. B. im infraroten Bereich liegt. Es wird also mit wenigstens zwei unterschiedlichen Trägersignalen gesendet, die jeweils einen unterschiedlichen Wellenlängen-Teilbereich aufweisen.

Der Empfänger des erfindungsgemäßen Sensorsystems ist derart sensitiv, dass er die Intensität der elektromagnetischen Strahlung in wenigstens den mindestens zwei interessierenden Wellenlängen-Teilbereichen empfangen kann. Die Verarbeitungseinheit verarbeitet die auf den wenigstens zwei Wellenlängen-Teilbereichen beruhenden Empfängerausgangssignale weiter und gewinnt daraus eine Information über die Übertragungseigenschaften.

Die vorliegende Erfindung ermöglicht es auch, ein Frequenzhopping durchzuführen. Hierbei erfolgt das Frequenzhopping jedoch nicht in Bezug auf die Modulationsfrequenz, sondern auf die Trägerfrequenz. Dies bedeutet im konkreten Beispiel, dass zwischen den beiden unterschiedlichen Wellenlängen-Teilbereichen hin- und hergeregelt oder -geschaltet werden kann. Somit wird die optische Trägerfrequenz des ausgesandten Signals verändert.

In einer bevorzugten Ausführungsform sendet der Sender elektromagnetische Strahlung in genau zwei Wellenlängen-Teilbereichen aus. Beispielsweise kann hier zwischen zwei unterschiedlichen Farben umgeschaltet werden. Die ausgesandte elektromagnetische Strahlung hat also zwei unterschiedliche Trägerwellenlängen, die beispielsweise als rotes oder grünes Licht sichtbar sein können. Auf diese Lichtsignale können Speisesignale aufmoduliert sein.

Besonders bevorzugt können auch mehr als zwei Wellenlängen-Teilbereiche ausgesandt werden, beispielsweise vier, sechs oder acht. Bevorzugt erfolgt die Aussendung der elektromagnetischen Strahlung in den Wellenlängen-Teilbereichen mit Wellenlängen-Teilbereichs spezifisch steuerbarer Intensität.

In einer ebenso bevorzugten Ausführungsform entsprechen die Wellenlängen-Teilbereiche jeweils einer Farbe. Der Sender sendet dann zwei separate Farbsignale aus, wobei mittels eines Umschalters zwischen den beiden Farbsignalen umgeschaltet wird, so dass zu jedem Zeitpunkt lediglich ein Farbsignal ausgesendet wird. Der Empfänger ist in diesem Fall genau für die Erfassung der Intensität der beiden Farbsignale ausgebildet. Die Verarbeitungseinheit verarbeitet dann die auf den beiden Farbsignalen beruhenden Empfängerausgangssignale weiter und gewinnt daraus Informationen über die Übertragungseigenschaften der Übertragungsstrecke.

Alternativ zu einem Umschalter, der die Teilbereiche hin- und herschaltet, kann auch ein Regler oder eine Regelschaltung eingesetzt werden. Diese ermöglicht zusätzlich oder alternativ die Einstellung der Intensität in den einzelnen Wellenlängen-Teilbereichen. Die Regelschaltung kann in den Sender integriert sein, z. B. in einem ASIC (application-specific integrated circuit) oder der Platine für die Sendersteuerung und/oder -versorgung. Die Regelschaltung kann aber auch eine separate Einheit sein oder in einen Generator integriert sein.

Bevorzugt umfasst der Sender wenigstens zwei Sendeelemente, die je ein Signal mit jeweils spezifischer Wellenlänge aussenden. Besonders bevorzugt ist das ausgesendete Trägersignal ein Farbsignal, dessen Wellenlänge im optisch sichtbaren Bereich liegt. Die beiden Sendeelemente sind bevorzugt abwechselnd aktiv, wobei die Sendeelemente beispielsweise lichtimitierende Dioden (LED) sein können.

In einer bevorzugten Ausführungsform senden die Sendeelemente des Senders für jeden Wellenlängenbereich, bevorzugt für jedes Farbsignal, einen konstanten Lichtstrom aus. Die Aussendung erfolgt derart, dass die emittierte Energiemenge der Summe der Strahlung aller Sendeelemente im Wesentlichen gleich ist oder dass die Summe der Empfängersignalamplituden, die auf den jeweiligen Sendeelementen beruhen, im Wesentlichen gleich ist. Somit können die Signalanteile in jedem Wellenlängen-Teilbereich derart geregelt werden, dass sich im Empfänger ein konstantes Empfängersignal ergibt, bevorzugt das Empfängersignal zu Null geregelt werden kann, insbesondere wenn die Signalanteile in einem der beiden Wellenlängen-Teilbereiche invertiert zu dem anderen Signalanteil sind.

In einer weiteren bevorzugten Ausführungsform senden Sendeelemente unterschiedlicher Sendewellenlänge, die gemeinsam den Sender bilden, für jeden Wellenlängenbereich, bevorzugt für jedes Farbsignal, einen mit einem ersten Speisesignal modulierten Lichtstrom aus. Die Aussendung erfolgt derart, dass die emittierte Energiemenge der Summe der Strahlung aller dieser Sendeelemente im Wesentlichen mit dem besagten ersten Speisesignal moduliert wird. Das Verhältnis der durch diese Sendeelemente emittierten Energiemengen zueinander wird durch ein zweites Speisesignal bestimmt. Somit können die Signalanteile in jedem Wellenlängen-Teilbereich derart geregelt werden, dass sich in einem für alle Wellenlängen gleich sensiblen Empfänger ein mit dem ersten Speisesignal moduliertes Empfängersignal ergibt. Durch einen ebenfalls aus Kompensations-Sendeelementen korrespondierender Sendewellenlängen bestehenden Kompensationssender kann nun bevorzugt das Empfängersignal zu Null geregelt werden. Dies ist insbesondere dann der Fall, wenn die Kompensationssignalanteile des Kompensationssenders in einem der beiden Wellenlängen-Teilbereiche invertiert zu dem korrespondierenden anderen Signalanteil des Senders sind.

In einer bevorzugten Ausführungsform umfasst der Sender eine Multiwellenlängen-LED, die elektromagnetische Strahlungen in wenigstens zwei unterschiedlichen Wellenlängen-Teilbereichen aussendet. Bevorzugt ist die Multiwellenlängen-LED steuerbar, insbesondere so steuerbar, dass die einzelnen Wellenlängen-Teilbereiche separat angesteuert werden können und dass bevorzugt deren Intensität geregelt werden kann.

Das erfindungsgemäße Sensorsystem führt also quasi eine zweidimensionale Spektralanalyse durch, die es erlaubt, das Sensorsystem von den umgebenden Störstrahlern zu trennen. Wird die Spektralanalyse durch eine Puls-Code-Modulation erweitert, erfolgt eine signifikant gute Trennung von umgebenden Störstrahlern. Dies haben Untersuchungen im Rahmen der Erfindung deutlich gemacht.

In einer bevorzugten Ausführungsform des erfindungsgemäßen Sensorsystems umfasst der Empfänger wenigstens zwei, bevorzugt wenigstens vier Empfangselemente, von denen wenigstens zwei, bevorzugt eine Vielzahl jeweils ein anderes spektrales Sensitivitätsprofil aufweisen. Die Empfangselemente sind also für einen bestimmten spektralen Bereich, folglich für einen bestimmten Wellenlängen-Teilbereich sensitiv. Bevorzugt sind die Empfangselemente Photodioden oder andere Dioden. Besonders bevorzugt sind die Empfangselemente spektral verschieden empfindliche Photodioden.

Die Empfangselemente des Empfängers können beispielsweise auch ein Empfangselement-Array bilden, beispielsweise ein Empfangsspektrometer. Möglich ist es auch, ein auf einer CMOS-Technologie beruhendes Spektrometer zu verwenden. Dabei werden die Empfangselemente in CMOS-Technik ausgebildet.

Besonders bevorzugt ist der Empfänger bzw. sind seine Empfangselemente im Bereich von sichtbarer und/oder infraroter Strahlung sensitiv. Die Wellenlängen-Teilbereiche liegen in diesem Fall zwischen einer Wellenlänge $\lambda$ etwa von 300 nm bis 790 nm und/oder bis 1.100 nm. Bevorzugt entspricht jeder der Wellenlängen-Teilbereiche dabei einer Farbe, einschließlich Infrarot.

In einer bevorzugten Ausführungsform kann das Sensorsystem als kompensierendes Messsystem ausgebildet sein, bei dem das eigentliche Übertragungssignal mit einem kompensierenden Signal am Empfänger so überlagert wird, dass der Sensor bzw. Empfänger ein nahezu konstantes Signal in Summe empfängt. Bevorzugt umfasst das Sensorsystem ein Kompensationselement, z. B. einen Kompensationssender, der ein Kompensationssignal in eine zweite Übertragungsstrecke hineinsendet, das von dem Empfänger nach Durchgang durch die zweite Übertragungsstrecke detektiert wird. Das Kompensationssendeelement kann bevorzugt eines der Sendeelemente des Senders sein. Das Kompensationssendeelement kann beispielsweise eine LED sein und wird dann als Kompensations-LED oder Kompensator bezeichnet.

Der Empfänger empfängt das Sendesignal des Senders und das Kompensationssignal und überlagert diese, bevorzugt linear und/oder summierend. Daraus wird das Empfängerausgangssignal gebildet, das in der Verarbeitungseinheit zu einem Kompensatorspeisesignal weiterverarbeitet wird. Das Kompensatorspeisesignal wird dem Kompensationssender zur rückkoppelnden Regelung des Empfängerausgangssignals zugeführt, um so Informationen über die Übertragungseigenschaften der Übertragungsstrecke zu übermitteln.

Selbstverständlich ist es auch möglich, dass die zweite Übertragungsstrecke, in die der Kompensationssender das Kompensationssignal sendet, der ersten Übertragungsstrecke entspricht. Somit sind die erste und die zweite Übertragungsstrecke gleich.

Ein wesentliches Unterscheidungskriterium der vorliegenden Erfindung zu den im Stand der Technik bekannten optischen Messverfahren liegt darin, dass die optische Trägerfrequenz der Trägerwelle schmalbandig ist. Gegebenenfalls ist sie aus mehreren schmalbandigen Frequenzen zusammengesetzt. Die Modulationsfrequenz kann beliebig sein; sie ist bevorzugt schmalbandig. Sie kann aber auch breitbandig sein.

Daraus ergeben sich unterschiedliche Konfigurationen zwischen Sender und Empfänger. Beispielsweise kann die Modulationsfrequenz des modulierten Signals des Senders breitbandig sein. Der Empfänger kann in diesem Fall schmalbandig ausgebildet werden, so dass er auf bestimmten, schmalbandigen Wellenlängen-Teilbereichen empfängt. Der Empfänger ist folglich in einem schmalbandigen Bereich der Trägerwelle sensitiv, beispielsweise genau für eine bestimmte Farbe, z. B. für Grün.

Darüber hinaus kann die Modulationsfrequenz des Senders schmalbandig sein, genauso wie die optische Trägerfrequenz. Der Empfänger kann dann ebenfalls schmalbandig sensitiv sein. Alternativ ist es möglich, dass der Empfänger breitbandig sensitiv ist. Die schmalbandige und breitbandige Sensitivität bezieht sich dabei stets auf die Trägerwelle des ausgesandten Signals, auf die das Speisesignal des Senders aufmoduliert ist.

In einer bevorzugten Ausführungsform ist das ausgesandte Signal, auf das das Sendesignal aufmoduliert ist, im optisch sichtbaren Bereich. Die Trägerlichtwellenlänge liegt somit etwa zwischen 380 nm und 790 nm. Dies entspricht einer optischen Trägerfrequenz im Bereich von 1,2 x 10$^{14}$ Hz bis ca. 2,6 x 10$^{14}$ Hz. Bei der Verwendung von infraroter Strahlung erweitert sich der Frequenzbereich auf ca. 3,6 x 10$^{14}$ Hz.

Das erfindungsgemäße Verfahren zur Vermessung der Übertragungseigenschaften einer ersten Übertragungsstrecke eines auf einer rückgekoppelten Kompensation beruhenden Messsystems oder Sensorsystems zwischen wenigstens einem Sender und wenigstens einem Empfänger hat einen Sender, der ein Signal in die Übertragungsstrecke hineinsendet, das nach Durchgang durch mindestens einen Teil der ersten Übertragungsstrecke von dem Empfänger detektiert wird. Ein Kompensationssender sendet ein Kompensationssignal in eine zweite Übertragungsstrecke hinein, das von dem Empfänger nach Durchgang durch die zweite Übertragungsstrecke detektiert wird. In dem Empfänger überlagern sich das Sendesignal und das Kompensationssignal linear, insbesondere summierend. Hieraus wird ein Empfängerausgangssignal gebildet, das zu einem Kompensatorspeisesignal zum Speisen des Kompensationssenders weiterverarbeitet wird. Das Kompensatorspeisesignal wird dem Kompensationssender zur rückkoppelnden Regelung des Empfängerausgangssignals zugeführt.

Das erfindungsgemäße Verfahren umfasst die folgenden Schritte: Zunächst wird wenigstens ein Teil des Spektrums elektromagnetischer Strahlung in wenigstens zwei vorgegebenen Wellenlängen-Teilbereichen mittels des Senders ausgesendet. Gemäß einem Verfahrensschritt wird die Sendeintensität in den wenigstens zwei Wellenlängen-Teilbereichen mithilfe mindestens eines Signals (Regelsignal) derart geregelt, dass insbesondere auch gegenläufig geregelt werden kann. Auf diese Weise kann Strahlung eines der mindestens zwei Wellenlängen-Teilbereiche ausgesendet werden. Die Teilbereiche können z. B. einzelne Farben sein. Es kann dann mittels eines Reglers oder eines Schalters zwischen den Teilbereichen hin- und hergeschaltet werden. Ein weiterer Verfahrensschritt umfasst das Empfangen wenigstens der Intensität der elektromagnetischen Strahlung in den wenigstens zwei interessierenden Wellenlängen-Teilbereichen. Dies erfolgt bevorzugt mittels des Empfängers, der wenigstens für die zwei interessierenden Wellenlängen-Teilbereiche sensitiv ist. Des Weiteren werden Empfängerausgangssignale gebildet, die auf den wenigstens zwei Wellenlängen-Teilbereichen beruhen. Die Empfängerausgangssignale werden zu einem Kompensatorspeisesignal in einem nächsten Verfahrensschritt weiterverarbeitet und aus den Empfängerausgangssignalen eine Information über die Übertragungseigenschaften der Übertragungsstrecke gewonnen.

Besonders bevorzugt umfasst die Weiterverarbeitung des Empfängerausgangssignals zu dem Kompensatorspeisesignal das Multiplizieren des Empfängerausgangssignals mit dem Speisesignal und Bilden eines Detektionssignals, das in einem weiteren Schritt in einem Filter gefiltert wird, so dass ein Projektionsbildsignal als gefiltertes Filterausgangssignal erzeugt wird. Die Schritte Bilden eines auf dem Projektionsbildsignal basierenden Ausgangssignals und Durchführen einer zumindest teilweisen Rücktransformation des Ausgangssignals mit dem Speisesignal derart, dass ein Vorsignal gebildet wird, schließen sich an. Die Rücktransformation wird dabei bevorzugt als Multiplikation ausgeführt. Aus dem Vorsignal wird dann das Kompensatorspeisesignal erzeugt, mit dem der Kompensationssender zur rückkoppelnden Regelung gespeist wird.

Bevorzugt wird auch hier elektromagnetische Strahlung in genau zwei, besonders bevorzugt in mehr als zwei unterschiedlichen Wellenlängen-Teilbereichen ausgesendet, welche eine spezifisch steuerbare Intensität aufweisen können. Die Wellenlängen-Teilbereiche entsprechen vorzugsweise einer Farbe, wobei bevorzugt zwei separate Farbsignale ausgesendet werden. Das Regeln der Aussendeintensität der beiden Wellenlängen-Teilbereiche stellt ein Umschalten zwischen den beiden Farbsignalen dar, das bevorzugt mittels eines Umschalters erfolgt. Zu jenem Zeitpunkt wird dann bevorzugt lediglich ein Farbsignal ausgesendet. Die Intensität der beiden Farbsignale wird im Empfänger erfasst und die den Farbsignalen beruhenden Empfängerausgangssignale werden weiter verarbeitet.

Vorzugsweise wird das Verfahren mittels Multiwellenlängen-LEDs oder mittels zweier Sendeelemente eines Senders durchgeführt, wobei die Sendeelemente je ein Farbsignal aussenden und abwechselnd aktiv sind. Die Sendeelemente sind bevorzugt lichtemittierende Dioden. Selbstverständlich ist es auch möglich, eines der Sendeelemente als Kompensator auszubilden, insbesondere wenn die Sendeelemente LEDs sind. Die Kompensations-LED kann eines der Sendeelemente sein, während die Sende-LED bzw. die Sende-LEDs die andere bzw. die anderen Sendeelemente sind. Es können auch hier unterschiedliche Farben zur Aussendung verwendet werden.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar.

Es zeigen:

Fig. 1 eine Prinzipskizze eines bekannten Messsystems gemäß dem Stand der Technik mit kompensierender Rückkopplung;

Fig. 2 ein mit einem beispielhaften Sensorsystem aufgebauter Gasanalysator;

Fig. 3 Beispiel eines mit dem Sensorsystem aufgebauten Gasanalysators;

Fig. 4 Ausführungsform mit einem farb- und amplitudenmodulierten Sender, einem farb- und amplitudenmodulierten Kompensationssender und zwei spektral unterschiedlich sensitiven Empfängern.

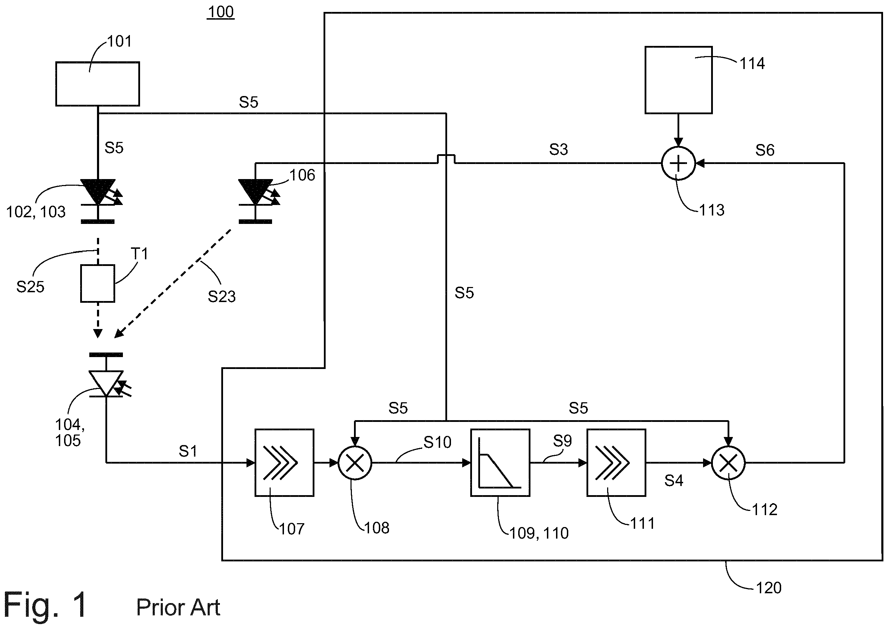

Fig. 1 zeigt ein im Stand der Technik übliches Messsystem 100 mit einer rückgekoppelten Kompensation, wie sie beispielsweise für optische Systeme nach dem Halios-Prinzip eingesetzt wird. Ein Signalgenerator 101 speist einen Sender 102, der bevorzugt als optische Sendediode 103 ausgeführt ist, mit einem Speisesignal S5. Der Sender 102 überträgt ein Sendesignal S25 zu einem als Photodiode 105 ausgebildeten Empfänger 104.

Ein Kompensationssender 106 sendet ein Kompensationssignal S23 an den Empfänger 104, das dort mit dem Sendesignal S25 des Senders 102 überlagert wird. Um die Übertragungseigenschaften der Übertragungsstrecke T1 zwischen dem Sender 102 und dem Empfänger 104 zu ermitteln und beispielsweise Objekte in der Übertragungsstrecke T1 zu detektieren, wird eine rückkoppelnde Regelung angewandt.

Das Empfängerausgangssignal S1 wird in dem optionalen Vorverstärker 107 verstärkt und anschließend mittels eines ersten als Multiplizierglied 108 ausgebildeten Demodulators mit dem Speisesignal S5 des Senders 102 multipliziert. Das so gebildete Ausgangssignal (Detektionssignal) S10 wird mittels eines Integrators 109, der vorzugsweise als Tiefpassfilter 110 ausgelegt ist, integriert (Signal S9) und anschließend mit einem Verstärker 111 verstärkt. Somit erhält man typischerweise einen Amplitudenwert, der sehr niederfrequent ist, vorzugsweise häufig ein DC-Wert oder nahezu ein DC-Wert ist. Dieses Ausgangssignal S4 wird in einem zweiten Modulator moduliert. Dieser Modulator ist typischerweise ein zweites Multiplizierglied 112. In dem Multiplizierglied 112 wird das Ausgangssignal S4 typischerweise mit dem Speisesignal S5 multipliziert und so ein Vorsignal S6 gebildet. Dieses wird in einem Summierer 113 mit einem Biaswert addiert, der bevorzugt von einem Biasgenerator 114 erzeugt wird. Daraus wird das Kompensatorspeisesignal S3 gebildet, das dem Kompensationssender 106 zugeführt wird.

Das Messsystem 100 weist also eine Verarbeitungseinheit 120 auf, in der das Empfängerausgangssignal S1 zu dem Kompensationsspeisesignal S3 weiterverarbeitet wird. Es sei darauf hingewiesen, dass der Verstärker 111, das Multiplizierglied 113 und/oder der Biasgenerator 114 optional sind.

Ein derartiges System mit einer rückgekoppelten Regelung wird im Stand der Technik als "Halios-System" bezeichnet. Dieses System ist robust gegenüber DC-Störungen, wie beispielsweise das Sonnenlicht. Allerdings können Störer, die genau auf der Taktfrequenz des Signalgenerators arbeiten, das System stören.

Die bekannten Systeme beruhen darauf, dass der Sender 102 ein moduliertes Sendesignal S25 aussendet, dessen optische Trägerfrequenz breitbandig ist. Die Modulationsfrequenz des Sendesignals S25 ist schmalbandig oder teilweise monofrequent. Dabei ist das Sendesignal S25 zusätzlich getaktet.

Im Gegensatz zu den im Stand der Technik bekannten Signalen wird erfindungsgemäß ein Sendesignal verwendet, das wenigstens einen Teil des Spektrums elektromagnetischer Strahlung in wenigstens zwei vorgegebenen Wellenlängen-Teilbereichen aussendet. Besonders bevorzugt umfasst das Sendesignal wenigstens zwei Farben, wobei die Aussendeintensität der Wellenlängenbereiche gegenläufig geregelt werden kann, so dass jeweils nur Strahlung mit einem Wellenlängen-Teilbereich ausgesendet wird.

Es wird erkannt, dass der Sender 102 und der Kompensationssender 106 durch einen Sender 200 des erfindungsgemäßen Messsystems ersetzt werden können. Der Sender 200 umfasst zwei Sendeelemente 201, 202, die jeweils als Dioden ausgebildet sind. Das Sendeelement 201 ersetzt die Sendediode 103 im Stand der Technik, während das Sendelement 202 den Kompensationssender 106 ersetzt. Darüber hinaus sind im Unterschied zum Stand der Technik natürlich auch die Trägersignale der beiden Sendeelemente unterschiedlich und jeweils schmalbandig. Die Sendeelemente 201, 202 müssen also entsprechend angepasst sein.

Im Rahmen der Erfindung wurde erkannt, dass mit dem erfindungsgemäßen Verfahren auf einfache Weise ein Halios-Messverfahren verwirklicht werden kann, das gegenüber Störungen sehr unempfindlich ist, da die Wellenlängen-Teilbereiche, in denen die Sendeelemente 201, 202 ausstrahlen, entsprechend angepasst werden können.

Darüber hinaus wurde erkannt, dass mit dem erfindungsgemäßen Verfahren auch eine Transmissionsmessung durchgeführt werden kann. Diese wird beispielsweise in der Absorptionsspektroskopie eingesetzt. In unterschiedlichen Anwendungen, beispielsweise der chemischen Analytik, wird diese Art der Spektroskopie verwendet.

Beispielsweise trifft dies auf die Gasanalytik, die Festkörperanalytik und die Fluidanalytik zu. Dabei wird das Transmissionsspektrum im Vergleich zu dem auf eine Probe angestrahlten Spektrum vermessen. Alternativ wird das reflektierte Spektrum im Vergleich zu denselben erfasst. Die Transmissionsmessung liefert ein Absorptionsspektrum, das charakteristisch für die physikalischchemischen Verhältnisse in einem Material ist. Die Reflexionsmessung ermöglicht Aussagen über das Spektrum der oberflächennahen Materialschichten.

Es wurde erkannt, dass das erfindungsgemäße Sensorsystem auch für Transmissionsmessungen angewendet wird. Der Sender, der bevorzugt eine LED mit "scharfer" Wellenlänge ist, also schmalbandig, erzeugt ein Signal, das von einer Probe in der Übertragungsstrecke, also im Strahlengang des Senders modifiziert wird. Typischerweise wird die Wellenlänge, also die optische Trägerfrequenz des Senders so gewählt, dass eine optimale Interaktion zwischen der Probe oder der zu bestimmenden Komponente in der Probe in der Übertragungsstrecke und dem Sendesignal stattfindet.

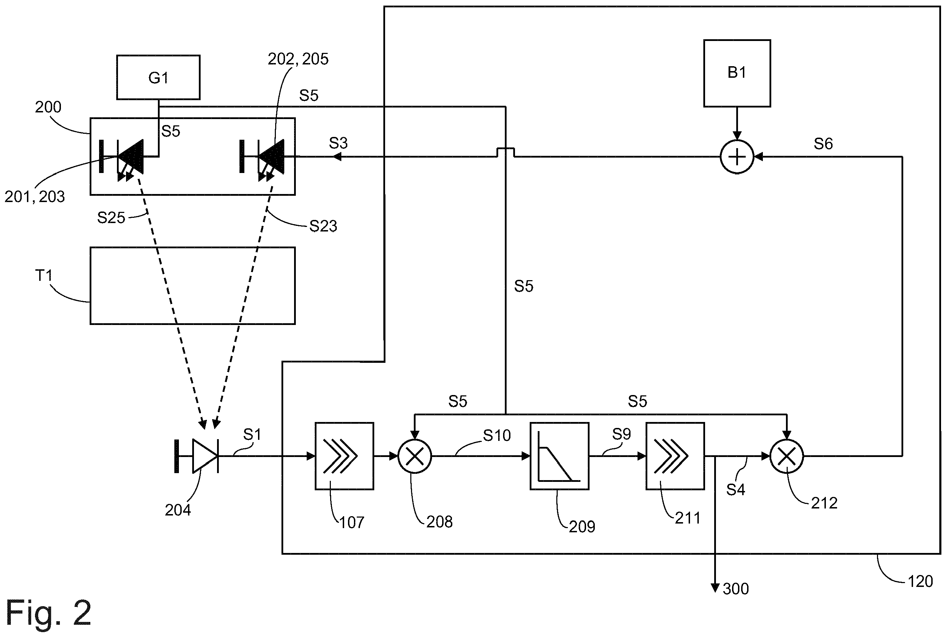

Fig. 2 zeigt eine Messschaltung, mit der sich beispielsweise die Konzentration eines Gases, eines Fluids oder eines Feststoffes in einem vorgegebenen Messraum ermitteln lässt.

Im Rahmen der Erfindung wurde erkannt, dass mit dem erfindungsgemäßen Verfahren auch eine Transmissionsmessung durchgeführt werden kann. Beispielsweise lässt sich die Konzentration eines Gases, eines Fluids oder eines Feststoffes in einem vorgegebenen Messraum ermitteln. Der Messraum mit Probe entspricht der Übertragungsstrecke T1 zwischen dem Sender 102 und dem Empfänger 104 gemäß Fig. 1.

Erfindungsgemäß wird der Sender 200 oder das Sendeelement 201 typischerweise als Sendediode 203, beispielsweise Sende-LED, mit scharfer Wellenlänge ausgebildet. Die Sendediode 203 erzeugt ein Signal, das von einer Probe in einem Messraum T1 im Strahlengang der Sendediode modifiziert wird. Typischerweise wird die Wellenlänge, also die optische Trägerfrequenz des Signals, das der Sender 200 aussendet, so gewählt, dass eine optimale Interaktion zwischen der Probe im Messraum T1 und dem Sendesignal S25 erfolgt. Eine derartige Ausführungsform eines einkanaligen Gassensors oder Diodenspektrometer ist in Fig. 2 gezeigt.

Soll beispielsweise die Konzentration von $CO_2$-Gas detektiert werden, so muss die Träger-Wellenlänge der Sendediode 203 einer Absorptionslinie des $CO_2$-Moleküls in dem Trägermedium (z. B. Luft im Messraum) entsprechen. In diesem Fall würde der mit der Gasprobe gefüllte Messraum T1 das Licht der Sendediode 203 in Abhängigkeit von der $CO_2$-Konzentration dämpfen. Das besondere Problem einer derartigen Messung besteht in der Regel darin, dass sehr kleine Dämpfungen und nur sehr kleine Konzentrationen zu bestimmen sind.

Der Empfänger (Empfangsdiode) 204 wandelt dann das empfangene Lichtsignal nach Transmission durch die Probenstrecke, die der Übertragungsstrecke, also dem Messraum T1 entspricht, wieder in ein elektrisches Signal um. Ein Halios-Sensorsystem mit einer kompensierenden Regelstrecke steuert nun ein zweites Sendeelement, das die Kompensationsdiode ist, derartig, dass dessen Licht ebenfalls von der Empfangsdiode 204 empfangen wird und das Empfängerausgangssignal S1 des Empfängers so nachregelt, dass dieses im Wesentlichen einen Konstantwert ergibt.

Im Gegensatz zum Stand der Technik ist es aber nun wesentlich, dass dieser Kompensationssender (Kompensationsdiode 205) auf einer anderen Trägerwellenlänge als die Sendediode 203 betrieben wird. Im Stand der Technik haben die Signale der beiden Sender 102, 106 (vgl. Fig. 1) die gleiche Trägerwellenlänge und die gleiche Modulationsfrequenz. Lediglich die Amplitude der aufmodulierten Signalanteile ist unterschiedlich. Die Signale sind zeitversetzt getaktet.

Erfindungsgemäß wird die Trägerwellenlänge des Sendesignals S23 der Kompensationsdiode 205 so gewählt, dass durch die Übertragungsstrecke allein, also ohne zu untersuchende Probe, keine Beeinträchtigung erfolgt, die wesentlich anders ist als die Beeinträchtigung, die das von der Sendediode 203 ausgesandte Sendesignal S25 ebenfalls durch die Übertragungsstrecke allein, also ohne zu untersuchende Probe, erfährt. Zu den Beeinträchtigungen durch die Übertragungsstrecke zählen das Trägermedium selbst, beispielsweise Luft, oder optische Vorrichtungen im Strahlengang zwischen der Kompensationsdiode 205 und der Empfangsdiode 204 wie beispielsweise Linsen, Spiegel oder optische Fenster zur Strahlenlenkung. Die einzige Ausnahme ist die Beeinträchtigung der zu messenden Probe oder des zu messenden Stoffes, wie im oben genannten Beispiel etwa des $CO_2$-Gases. Die Trägerwellenlänge des Kompensationssendesignals S23 ist so gewählt, dass mit der Probe möglichst keine Interaktion oder jedenfalls eine wesentlich geringere Interaktion stattfinden darf. Das von der Kompensationsdiode 205 ausgesandte Signal S23 erfährt also eine deutlich geringere Dämpfung als das Sendesignal S25.

Hierdurch kann der Referenzstrahl des zweiten Senders, also der Kompensationsdiode 205 im Gegensatz zu der im Stand der Technik bekannten Art den gleichen Signalweg zurücklegen und wird erst dann in dem Empfänger, hier der Empfangsdiode 204, empfangen.

Wesentlich bei diesem Verfahren ist, dass der Empfänger 104 empfindlich für beide Trägerwellenlängen ist, also zum einen empfindlich für die Trägerwellenlänge der Sendediode 203 als auch für die zweite Trägerwellenlänge der Kompensationsdiode 205.

Eines der wesentlichen Merkmale der Erfindung ist es folglich, dass das Kompensationssendesignal der Kompensationsdiode 205 in seinen Eigenschaften so gewählt ist, dass dessen Wechselwirkung mit den zu messenden Eigenschaften der Übertragungsstrecke T1 minimiert wird. Es wird folglich die Wechselwirkung mit der zu messenden Probe, beispielsweise dem $CO_2$-Gas, möglichst gering. Die Wechselwirkungen mit den übrigen Eigenschaften der Übertragungsstrecke T1, also des Messraums, Spiegels, der Linsen oder der sonstigen Vorrichtungen im Strahlengang entsprechen den Wechselwirkungen durch das Sendesignal der Sendediode 205 oder bestehen durch geeignete Wahl des Signals im Wesentlichen nicht. Darüber hinaus muss eine Kompensationswirkung an der Empfangsdiode 204 möglich sein, was in der Regel gegeben ist.

Die Weiterverarbeitung des Empfängerausgangssignals S1 erfolgt in der Verarbeitungseinheit 120 in der bekannten Weise. Die Verarbeitungseinheit 120 umfasst dazu bevorzugt einen Verstärker 107, ein Multiplizierglied 208, einen Filter 209 und einen weiteren Verstärker 211, an dessen Ausgang das Signal S4 anliegt. Dieses Signal liegt bevorzugt auch am Ausgang der Verarbeitungseinheit 300. In dem Multiplizierglied 212 wird das Ausgangssignal S4 typischerweise mit dem Speisesignal S5 multipliziert und so ein Vorsignal S6 gebildet, das in einem Summierer mit einem Biaswert addiert wird, der bevorzugt von einem Biasgenerator B1 erzeugt wird. Daraus wird das Kompensatorspeisesignal S3 gebildet, das dem Kompensationssender 205 zugeführt wird.

Selbstverständlich lässt sich dieses Verfahren auch mit den anderen bekannten Halios-Konzepten kombinieren. Beispielsweise ist die Möglichkeit der Verwendung eines schmalbandigen Sendesignals gegeben, bei dem zusätzlich das Modulationssignal schmalbandig ist, also die Modulationsfrequenz in einem schmalbandigen Bereich liegt und über ein Frequenzhopping verändert werden kann. Auch ist eine auf dem CDMA-Verfahren (Code Division Multiple Access-Verfahren) basierende Regelung möglich oder eine optische "Timeof-Flight-Messung Neben der $CO_2$-Messung oder einer anderen Gasanalyse lässt sich das System in vielen Bereichen einsetzen. Beispielsweise ist es möglich, in einem Kraftfahrzeug auf der Fahrbahn vorhandenes Eis zu erkennen. Auch können Verunreinigungen gemessen werden, beispielsweise Luftverunreinigungen zur Steuerung der Klimaanlage oder eines besonderen Filters im Kraftfahrzeug oder in anderen Systemen. Darüber hinaus können Verunreinigungen im Abgas einer Verbrennungsanlage oder eines Kraftfahrzeugs detektiert werden. Die weiteren Anwendungsmöglichkeiten sind mannigfaltig.

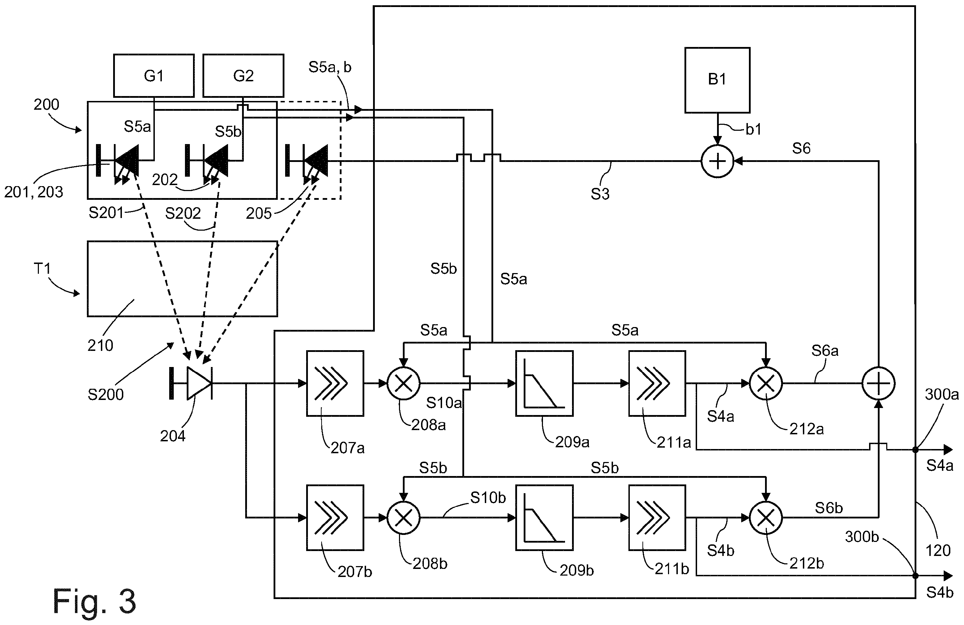

Während die Fig. 2 einen Gassensor bzw. Titrationssensor zeigt, der als einkanaliges Diodenspektrometer ausgebildet ist und bei dem der Sender sowohl eine Sendediode 203 als auch eine Kompensationsdiode 205 umfasst, stellt Fig. 3 einen zweikanaligen Gassensor bzw. Titrationssensor dar. Bei diesem Diodenspektrometer umfasst der Sender 200 eine erste Sendediode 201 und eine zweite Sendediode 202. Die beiden Sendedioden 201, 202 sind vorzugsweise als Laserdioden ausgebildet, die mit zwei unterschiedlichen Wellenlängen-Teilbereichen arbeiten, wobei die beiden Wellenlängen-Teilbereiche vorwiegend schmalbandig sind. In einer besonderen Ausführungsform umfassen sie genau die Wellenlängen $\lambda 1$ und $\lambda 2$. Diese beiden Wellenlängen entsprechen den Absorptionswellenlängen der Komponenten, die in einem Medium (z. B. Gas) gemessen werden sollen. Dabei ist es möglich, gleichzeitig zwei Komponenten zu ermitteln.

Das von dem Sender 200 ausgesandte Sendesignal S200, das sich aus den Sendesignalen S201 und S202 der Sendeelemente 201, 202 zusammensetzt, durchläuft eine Messstrecke oder Übertragungsstrecke T1, die beispielsweise durch einen Messraum 210 gebildet sein kann. In dem Messraum 210 ist die zu untersuchende Probe enthalten. Das Sendesignal S200 wird dann von einem Empfänger, der eine Empfangsdiode 204 ist, empfangen, der auf den beiden Wellenlängen $\lambda 1$ und $\lambda 2$ sensitiv ist. Die Empfangsdiode 204 kann entweder so konzipiert sein, dass er recht schmalbandig auf genau den interessierenden Wellenlängen $\lambda 1$, $\lambda 2$ empfindlich ist. Sie kann jedoch auch in einem breitbandigeren Wellenlängenbereich empfindlich sein, so dass jedenfalls die beiden Wellenlängen $\lambda 1$, $\lambda 2$ umfasst sind.

Die Kompensationsdiode 205 kann entweder ein selbständiger Kompensationssender 106 oder Teil des Senders 200, z. B. ein Sendeelement, sein. Die Ausführungsform, in der die Kompensationsdiode 205 ein Sendeelement des Senders 200 ist, ist in Fig. 3 gestrichelt dargestellt. Dies ist eine bevorzugte Variante, da nur ein Sender 200 vorhanden sein muss. Der Sender 200 kann selbstverständlich auch als eine einzige Multiwellenlängendiode bzw. -LED ausgeführt sein, die die Funktionen der Sendeelemente 201, 202 bzw. der Sendediode 203 und Kompensationsdiode 205 umfasst. Die abgestrahlte Trägerwellenlänge der Kompensationsdiode 205 ist jedenfalls so gewählt, dass sie neben den beiden Absorptionswellenlängen $\lambda1$ und $\lambda2$ liegt. Es gibt folglich keinen überlappenden Bereich zwischen der Kompensationsträgerwellenlänge $\lambda k$ und den beiden Senderwellenlängen $\lambda1$, $\lambda2$.

Die Verarbeitungsstrecke hinter der Empfangsdiode 204 entspricht den bekannten Signalverarbeitungssträngen, wobei diese doppelt ausgeführt sind. In den Demodulatoren 208a, 208b werden jeweils das verstärkte Empfängerausgangssignal S1 mit den jeweiligen Speisesignalen S5a bzw. S5b multipliziert. Die anschließende Verarbeitung erfolgt analog zu dem einkanaligen Gassensor (Fig. 2). Am Ausgang der Verstärker 211a und 211b stehen die Signale S4a und S4b an, die ausgegeben werden können (Ausgang 300a, 300b), um in einer weiteren Verarbeitungseinheit weiterverarbeitet und ausgewertet werden zu können.

Die Ausgangssignale S4a und S4b werden jeweils in einem weiteren Multiplizierer 212a bzw. 212b mit den Sendesignalen S5a bzw. S5b multipliziert, wodurch die Ausgangssignale S6a und S6b gebildet werden. Diese auch als Vorsignale bezeichneten Signale werden summiert und als Summensignal mit einem Biaswert b1 aus einem Biasgenerator B1 addiert, bevor das Additionssignal als Kompensationsspeisesignal S3 der Kompensationsdiode 205 zugeführt wird.

Die Sendesignale S5a und S5b werden bevorzugt orthogonal gewählt. Das bedeutet, dass die auf das Signal S5a zurückzuführenden Signalanteile auf die Signalanteile S5b projiziert werden.

Zur Speisung der beiden Sendeelemente 201 und 202 des Senders 200 können ein oder mehrere Signalgeneratoren G1 und/oder G2 verwendet werden. In der gezeigten Ausführungsform werden die beiden Sendeelemente 201, 202 des Senders 200 mit jeweils einem eigenen Generator gespeist. Selbstverständlich ist es auch möglich, nur einen Generator zu verwenden. Jedenfalls wird in dem Sender 200 zwischen den beiden Wellenlängen-Teilbereichen auf die Sendeelemente 201 und 202 umgeschaltet.

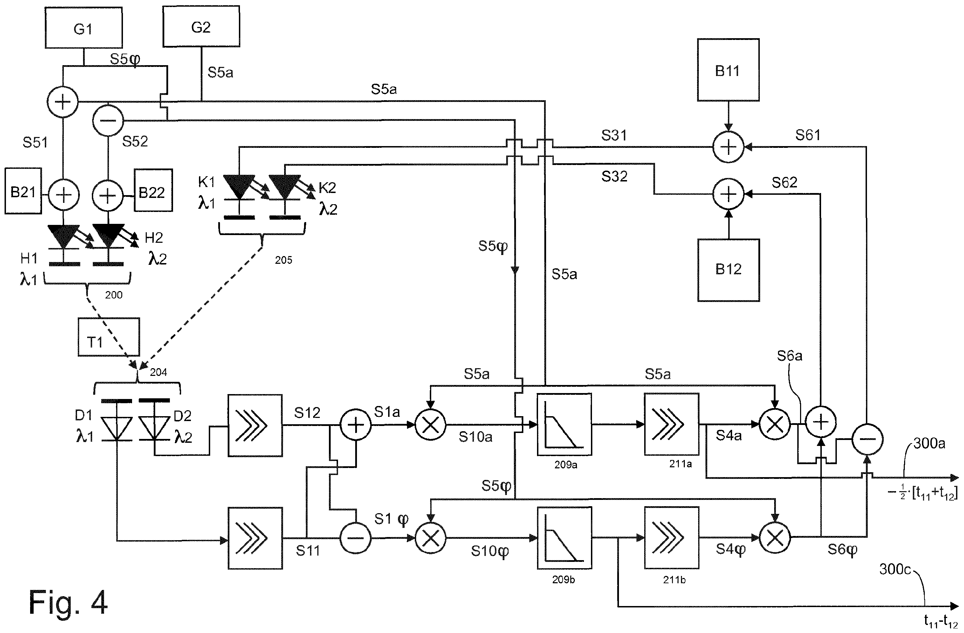

Figur 4 zeigt eine alternative Ausführungsform mit einem farb- und amplitudenmodulierten Sender, einem farb- und amplitudenmodulierten Kompensationssender und zwei spektral unterschiedlich sensitiven Empfängern. Dieses System ist der allgemeinere Fall des Systems, das in Figur 1 als Spezialfall dargestellt ist.

Der Sender besteht aus zwei Sendeelementen H1 und H2. Dem Sendeelement H1 ist die Wellenlänge $\lambda1$ zugeordnet, was beispielsweise der Farbe rot entsprechen kann. Dem Sendeelement H2 ist die Wellenlänge $\lambda2$ zugeordnet, was beispielsweise der Farbe blau entsprechen kann. Selbstverständlich sind analoge Systeme mit mehr als zwei Sendeelementen und/oder Wellenlängen denkbar. Das hier dargestellte Beispiel reicht jedoch zum Verständnis vollständig aus.

Jedes der Sendeelemente H1 und H2 besitzt sein eigenes Speisesignal S51 und S52, d. h. wird mit einem eigenen Speisesignal S51 bzw. S52 gespeist. Diese Signale werden durch zwei Signal-Generatoren G1 und G2 gespeist, die die Signale S5φ und S5a generieren. Mit dem Signal S5a soll die gemeinsame Amplitude der Signale S51 und S52 moduliert werden, mit dem Signal S5φ das Intensitätsverhältnis der beiden Signale S51 und S51 zueinander. Es ergeben sich somit die folgenden Verhältnisse:

$$S51 = S5a + S5\varphi$$

$$S52 = S5a - S5\varphi$$

$$S51 + S52 = S5a$$

Aus diesem Grund ist eine Koordinatentransformation zwischen den beiden Signalen S5φ und S5a im, im folgenden als "φ-a-Koordinatensystem" bezeichneten, Koordinatensystem in die Signale S51 und S52 im, im folgenden als "1-2-Koordinatensystem" bezeichneten, Koordinatensystem notwendig.

Hier geschieht dies durch eine Matrixmultiplikation mit der Matrix M1.

$$\begin{pmatrix} 1 & 1 \\ -1 & 1 \end{pmatrix}$$

Es handelt sich also um eine Drehstreckung.

Vor der Aussendung ist es in der Regel notwendig, durch Addition von Bias-Werten B21 und B22 den Arbeitspunkt der Sender H1 und H2 zu optimieren. Die Sender H1 und H2 senden nun in eine erste Übertragungsstrecke. Dabei wird das Licht dieser Sender, wie bekannt, durch die Eigenschaften der Übertragungsstrecke T1 modifiziert. Diese Modifikation kann wiederum durch das Übertragungsmedium selbst oder Objekte in der Übertragungsstrecke oder die innere Struktur der Übertragungsstrecke erfolgen.

Das Sendesignal der Sender H1 und H2 wird durch spektral unterschiedlich empfindliche Empfänger D1 und D2 empfangen. Dabei soll D1 beispielsweise für die Wellenlänge $\lambda1$ empfindlicher sein als für die Wellenlänge $\lambda2$. Durch geeignete Verarbeitung (beispiels-

weise Verstärkung und Vorfilterung) erhält man die beiden Empfängerausgangssignale S11 und S12. Im vorliegenden beispielhaften Fall erfolgt nun bevorzugt eine Koordinatenrücktransformation der Signale S11 und S12 vom "1-2-Koordinatensystem" in das "φ-a-Koordinatensystem" mit den korrespondierenden Signalen S1a und S1φ. Dies geschieht im vorliegenden Beispiel durch eine erneute Matrixmultiplikation mit der Matrix M2.

$$\begin{pmatrix} 1 & -1 \\ 1 & 1 \end{pmatrix}$$

Diese Matrix ist also die Transponierte zu M1 (M2 = M1$^T$). Die dabei auftretende Multiplikation aller Amplituden mit dem Faktor 2 ist in der Praxis nicht relevant. Er lässt sich typischerweise durch eine geeignete Verstärkung anpassen.

Im Folgenden wird durch Bildung eines Skalarprodukts der Anteil des Signals S5a im rücktransformierten Empfängerausgangssignal S1a bestimmt. Hierzu wird beispielsweise dieses Signal S1a zunächst mit dem Speisesignal S5a zum Signal S10a multipliziert und sodann zum Signal $F_a[S10a]$ gefiltert, wobei das Filter beispielsweise ein lineares Tiefpassfilter ist, das nur die nahe der Modulationsfrequenz f = 0 Hz liegenden Signalanteile durchlässt. Das so gewonnene Filterausgangssignal $F_a[S10a]$ wird zum Signal S4a verstärkt. Dieses Signal S4a ist einer der Messwerte des Systems und spiegelt die Wellenlängen unabhängige Dämpfung im Übertragungskanal T1 wider. Es wird aus der gewichteten Summe der Übertragungsparameter (Dämpfung) $t_{11}$ und $t_{12}$ (der Matrix M1) gebildet und liegt bevorzugt am Ausgang 300a an. Idealerweise ergibt sich für das Signal: S4a = - ½ [$t_{11}$ + $t_{12}$]. Das Vorzeichen und der Faktor sind typischerweise von dem Verstärker abhängig und lassen sich durch einen geeignet gewählten Verstärker festlegen.

Durch Bildung eines Skalar-Produktes wird ebenfalls der Anteil des Signals S5φ im rücktransformierten Empfängerausgangssignal S1φ bestimmt. Hierzu wird beispielsweise analog zur zuvor beschriebenen Behandlung des Signals S1φ dieses Signal S1φ zunächst mit dem zugehörigen Speisesignal S5φ zum Signal S10φ multipliziert und sodann zum Signal $F_φ[S10φ]$ gefiltert, wobei das Filter wiederum beispielsweise ein lineares Tiefpassfilter ist, das nur die nahe der Modulationsfrequenz f = 0 Hz liegenden Signalanteile durchlässt. Das so gewonnene Filterausgangssignal $F_φ[S10φ]$ wird zum Signal S4φ verstärkt. Im Gegensatz zum Amplitudenausgangssignal S4a ist jedoch das Filterausgangssignal vor der Verstärkung der zweite Messwert des Systems und spiegelt die relative, Wellenlängen abhängige Dämpfung im Übertragungskanal wider. Das Signal wird aus der Differenz der Übertragungsparameter (Dämpfung) $t_{11}$ und $t_{12}$ (der Matrix M2) gebildet (= $t_{11}$ - $t_{12}$). Es liegt bevorzugt an einem Ausgang 300c an. Somit ergibt sich:

$F_φ[S10φ]$ = $t_{11}$ - $t_{12}$. Durch einen geeigneten Verstärker lassen sich die Signale jeweils so anpassen, dass der Regelkreis nicht belastet wird. Die Signale weisen dann gegebenenfalls einen Gewichtungsfaktor auf.

Die Verwendung anderer Skalar-Produkte ist insbesondere dann sinnvoll, wenn das Anwendungssystem aufgrund besonderer Anforderungen die Verwendung anderer Filter erzwingt. Dem Fachmann wird es nicht schwerfallen, durch Änderung der Definition des Skalar-Produktes zweier Signale, andere Anwendungen zu erschließen. An dieser Stelle sei auf die sehr umfangreiche signal- und regelungstechnische Literatur verwiesen.

Würde es sich bei den Signalen S5a und S5φ um Sinus und/oder Cosinus-Signale handeln, so würden die Signale S4a und S4φ den zugehörigen Fourierkoeffizienten entsprechen. Die hier beschrieben Methodik liefert also eine Transformation in den dualen Raum der S5x Signale, wobei x in diesem Beispiel für a und φ steht. Zum besseren Verständnis sprechen wir hier für diese Transformation von einer "Fourier-Transformation" und setzen diese in Anführungsstriche, um darzustellen, dass es sich nicht um dieselbe sondern nur um ein Analogon handelt.

Es folgt nun die "Fourier-Rücktransformation" und die Koordinatenrücktransformation in das "1-2-Koordinatensystem".

Zur "Fourier-Rücktransformation" werden die derartig ermittelten Amplituden- und Phasensignale S4a und S4φ mit ihren korrespondierenden Speisesignalen S5a und S5φ zu den Signalen S6a und S6φ multipliziert. Zur Rücktransformation in das "1-2-Koordinatensystem" werden die beiden Signale mit der gleichen Transformation wie die Signale S5a und S5φ versehen. Das bedeutet im konkreten Beispiel, dass sie mit der Matrix M1

$$\begin{pmatrix} 1 & 1 \\ -1 & 1 \end{pmatrix}$$

multipliziert werden. Es gilt dabei die folgende Zuordnung:

$$S61 = S6a + S6φ$$

$$S62 = S6a - S6φ$$

$$S61 + S62 = S6a$$

Die so erhaltenen rücktransformierten Signale S61 und S62 werden mit Bias-Werten B11, B12 zur Einstellung des Arbeitspunktes der Kompensations-Sendeelemente K1 und K2 versehen. Die zugehörigen Signale sind mit S31 und S32 bezeichnet.

In dem vorliegenden Beispiel soll das Kompensations-Sendeelement K1 vorwiegend die Wellenlänge $\lambda 1$ korrespondierend zum Sendeelement H1 aussenden und das Kompensations-Sendeelemente K2 vorwiegend die Wellenlänge $\lambda 2$ korrespondierend zum Sendeelement H2 aussenden.

Das Signal der Kompensations-Sendeelemente K1 und K2 wird in den Empfängerelementen D1 und D2 typischerweise jeweils summierend linear überlagert. Die Kompensations-Sendeelemente K1 und K2 senden dabei in eine zweite Übertragungsstrecke hinein, die deren Signal entweder nicht oder in einer vorbestimmten Weise beeinflusst bevor es auf die Empfangselemente D1 und D2 trifft.

Es lässt sich zeigen, dass für das oben beschriebene Beispiel bei geeigneter Wahl der Verstärkungen, der Filter und der Signaleigenschaften der Signale S5a und $S5\varphi$ die Dämpfung t11 im ersten Übertragungskanal bei der Wellenlänge $\lambda 1$ und die Dämpfung t12 im ersten Übertragungskanal bei der Wellenlänge $\lambda 2$ in folgendem Zusammenhang mit den Ausgangswerten $F_\varphi[S10\varphi]$ und S4a des Systems stehen:

$$-\frac{F_\varphi\big[S_{10\varphi}\big]+2S_{4a}}{2}=t_{12}$$
$$\frac{F_\varphi\big[S_{10\varphi}\big]-2S_{4a}}{2}=t_{11}$$

Es ist somit möglich, die Amplitudenänderung $t_{11}$ von der Farbänderung zu trennen. Das Signal S4a gibt die Amplitudenänderung beim Durchgang durch das Medium T1 wieder; das Signal $F_\varphi[S_{10}\varphi]$ gibt die Änderung der Zusammensetzung des Signals (insbesondere des Lichts) nach $\lambda 1$ und $\lambda 2$ wieder. Beispielsweise ist das System als Titrations- oder Farbsensor in einer gestörten Umgebung geeignet. Die Einzeldämpfungen lassen sich ebenso bestimmen, z. B. durch Koordinatentransformation.

## Patentansprüche

1. Sensorsystem mit wenigstens einem Sender (200) und Empfängern (204; D1, D2) zur Vermessung der Übertragungseigenschaften einer ersten Übertragungsstrecke zwischen einem Sender (200) und den Empfängern (D1, D2), wobei

- der Sender (200) zwei Sendeelemente (H1, H2) umfasst, denen je eine Wellenlänge ($\lambda_1$, $\lambda_2$) zugeordnet ist und die von je einem Generatorspeisesignal (S51, S52) von zwei Generatoren (G1, G2) gespeist werden, wobei die Generatorspeisesignale (S51, S52) aus von den Generatoren (G1, G2) erzeugten Generator-Signalen ($S5\varphi$, S5a) gebildet werden,

- der Sender (200) ausgebildet und eingerichtet ist, um Sendesignale in die erste Übertragungsstrecke hinein zu senden, die nach Durchgang durch mindestens einen Teil der ersten Übertragungsstrecke von den Empfängern (D1, D2) detektiert werden,
- die Empfänger (D1, D2) ausgebildet und eingerichtet sind, um die Sendesignale (S25, S200) zu empfangen und daraus Empfängerausgangssignale (S11, S12) zu bilden,
- eine Verarbeitungseinheit (120) dazu ausgebildet und eingerichtet ist, um die Empfängerausgangssignale (S11, S12) weiterzuverarbeiten und eine Information der Eigenschaften der ersten Übertragungsstrecke zu gewinnen,

**dadurch gekennzeichnet, dass**

- der Sender (200) wenigstens einen Teil des Spektrums elektromagnetischer Strahlung in wenigstens zwei vorgegebenen Wellenlängen-Teilbereichen aussenden kann, wobei die Aussendeintensität der mindestens zwei Wellenlängen-Teilbereichen mit Hilfe mindestens eines Signals, insbesondere gegenläufig, geregelt werden kann, so dass die Strahlung der mindestens zwei Wellenlängen-Teilbereiche in einem durch die Regelung vorgegeben Verhältnis ausgesendet wird;
- die Empfänger (D1, D2) spektral unterschiedlich empfindlich sind;
- die Verarbeitungseinheit (120) die auf den wenigstens zwei Wellenlängen-Teilbereichen beruhenden Empfängerausgangssignale (S11, S12) weiterverarbeitet und daraus eine Information über die Übertragungseigenschaften gewinnt;
- ein Kompensationssender (205) zwei Kompensations-Sendeelemente (K1, K2) aufweist, die ein Kompensationssignal (S23) in eine zweite Übertragungsstrecke hinein senden, das von den Empfängern (D1, D2) nach Durchgang durch die zweite Übertragungsstrecke detektiert wird,
- die Empfänger (D1, D2) die Sendesignale (S25, S200) und das Kompensationssignal (S23) empfangen, überlagern, insbesondere linear und/oder summierend, und daraus die Empfängerausgangssignale (S11, S12) bilden,
- die Verarbeitungseinheit (120) die Empfängerausgangssignale (S11, S12) zu zwei Kompensatorspeisesignalen (S31, S32) weiterverarbeitet,

die Verarbeitungseinheit (120) die Kompensatorspeisesignale (S31, S32) dem Kompensationssender (205) zuführt, und

- die Verarbeitungseinheit (120) mit den Kompensatorspeisesignalen (S31, S32) eine rückkoppelnde Regelung der Empfängerausgangssignale (S11, S12) durchführt, um so Informationen über die Übertragungseigenschaften der Übertragungsstrecke zu ermitteln,

wobei

das eine Empfängerausgangssignal (S11) mit dem anderen Empfängerausgangssignal (S12) summiert wird zu einem weiterverarbeiteten Empfängerausgangssignal (S1a), das mit dem einen Generator-Signal (S5a) multipliziert wird und ein Detektionssignal (S10a) bildet, das mittels eines Filters (209a) gefiltert und mittels eines Verstärkers (211a) verstärkt wird und an einem Ausgang (300a) der Verarbeitungseinheit (120) als ein Ausgangssignal (S4a) anliegt,

das eine Empfängerausgangssignal (S11) und das andere Empfängerausgangssignal (S12) subtrahiert werden zu einem anderen weiterverarbeiteten Empfängerausgangssignal (S1φ), das mit dem anderen Generator-Signal (S5φ) multipliziert wird und ein anderes Detektionssignal (S10φ) bildet, das mittels eines Filters (209b) gefiltert wird und als Filterausgangssignal Fφ[S10φ] an einem anderen Ausgang (300c) der Verarbeitungseinheit (120) anliegt, wobei das Filterausgangssignal Fφ[S10φ] verstärkt wird zu einem anderen Ausgangssignal (S4φ) und wobei aus dem einen Ausgangssignal (S4a) und dem Filterausgangssignal Fφ[S10φ] sich die Dämpfungen bei der ersten und zweiten Wellenlänge ($\lambda_1$, $\lambda_2$) bestimmen lassen.

2. Sensorsystem nach dem vorhergehenden Anspruch **dadurch gekennzeichnet, dass** die Aussendeintensität der mindestens zwei Wellenlängen-Teilbereiche ($\lambda 1$, $\lambda 2$) mit Hilfe mindestens eines weiteren Signals gleichläufig geregelt wird, so dass die Strahlung der mindestens zwei Wellenlängen-Teilbereiche ($\lambda 1$, $\lambda 2$) mit einer durch die Regelung vorgegeben Gesamtintensität ausgesendet wird.

3. Sensorsystem nach einem der vorhergehenden Ansprüche, **dadurch gekennzeichnet, dass** der Sender (200) elektromagnetische Strahlung in mehr als zwei Wellenlängen-Teilbereichen ($\lambda 1$, $\lambda 2$) aussendet, bevorzugt mit wellenlängenbereichsspezifisch steuerbarer Intensität.

4. Sensorsystem nach einem der vorhergehenden Ansprüche, **dadurch gekennzeichnet, dass**

    - die Wellenlängen-Teilbereiche einer Farbe entsprechen und
    - der Sender zwei separate Farbsignale ($\lambda 1$, $\lambda 2$) aussenden kann, wobei mittels einer gegenläufigen Regelung, bevorzugt eines Umschalters, zwischen den beiden Farbsignalen ($\lambda 1$, $\lambda 2$) umgeregelt wird, so dass zu jedem Zeitpunkt mindestens ein Farbsignal ausgesendet wird;
    - die spektral unterschiedlich empfindlichen Empfänger (D1, D2) für die Erfassung der Intensität der zwei Farbsignale ($\lambda 1$, $\lambda 2$) geeignet sind.

5. Sensorsystem nach einem der vorhergehenden Ansprüche, **dadurch gekennzeichnet, dass** die Sendeelemente (H1, H2) des Senders (200) für jeden Wellenlängenbereich ($\lambda 1$, $\lambda 2$), insbesondere jedes Farbsignal, einen konstanten Lichtstrom derart aussendet, dass die emittierte Energiemenge der Summe der Strahlung aller Sendeelemente (H1, H2) im Wesentlichen gleich oder dass die Summe der Empfängersignalamplituden im Wesentlichen gleich ist.

6. Sensorsystem nach einem der vorhergehenden Ansprüche, **dadurch gekennzeichnet, dass** der Empfänger (204) wenigstens zwei, bevorzugt wenigstens vier Empfangselemente (D1, D2) umfasst, die jeweils ein anderes spektrales Sensitivitätsprofil aufweisen, wobei die Empfangselemente bevorzugt spektral verschieden empfindliche Photodioden oder andere Dioden oder LEDs sind.

7. Sensorsystem nach einem der vorhergehenden Ansprüche, **dadurch gekennzeichnet, dass** der Empfänger (204) im Bereich von sichtbarer und IR-Strahlung sensitiv ist, und die Wellenlängen-Teilbereiche zwischen einer Wellenlänge von 380 nm bis 1100 nm liegen.

8. Verfahren zur Vermessung der Übertragungseigenschaften einer ersten Übertragungsstrecke eines auf einer rückgekoppelten Kompensation beruhenden Messsystems (1) zwischen wenigstens einem Sender (200) mit zwei Sendeelementen (H1, H2), denen je eine Wellenlänge ($\lambda_1$, $\lambda_2$) zugeordnet ist und die von je einem Generatorspeisesignal (S51, S52) von zwei Generatoren (G1, G2) gespeist werden, und Empfängern (204; D1, D2), wobei

    - die Generatorspeisesignale (S51, S52) aus von den Generatoren (G1, G2) erzeugten Generator-Signalen (S5φ, S5a) gebildet werden,
    - der Sender (200) Sendesignale in die Übertragungsstrecke hineinsendet, die nach Durchgang durch mindestens einen Teil der ersten Übertragungsstrecke von den Empfängern (D1, D2) detektiert werden,
    - ein Kompensationssender (205) mit zwei Kompensations-Sendeelementen (K1, K2) Kompensationssignale in eine zweite Übertragungsstrecke hineinsendet, die von den Empfängern (D1, D2) nach Durchgang durch die zweite Übertragungsstrecke detektiert werden,
    - in den Empfängern (D1, D2) sich die Sendesignale und Kompensationssignale linear, insbesondere summierend, überlagern und daraus Empfängerausgangssignale (S11, S12) gebildet werden,
- die Empfängerausgangssignale (S11, S12) weiterverarbeitet werden zu Kompensatorspeisesignalen (S31, S32) zum Speisen des Kompensationssenders (205);
- die Kompensatorspeisesignale (S31, S32) zu dem Kompensationssender (205) zur rückkoppelnden Regelung der Empfängerausgangssignale (S11, S12) zugeführt werden;

**gekennzeichnet durch** die folgenden Schritte:

- Aussenden wenigstens eines Teils des Spektrums elektromagnetischer Strahlung in wenigstens zwei vorgegebenen Wellenlängen-Teilbereichen mittels des Senders (200);
- Regeln der Aussendeintensität in den mindestens zwei Wellenlängen-Teilbereichen mit Hilfe mindestens eines Signals, so dass auch Strahlung der mindestens zwei Wellenlängen-Teilbereiche in einem im Wesentlichen durch die Regelung vorgegeben Verhältnis ausgesendet wird,
- Empfangen wenigstens der elektromagnetischen Strahlung mittels der Empfänger (D1, D2), die spektral unterschiedlich empfindlich sind;
- Bilden von Empfängerausgangssignalen (S11, S12);
- Weiterverarbeiten der Empfängerausgangssignale (S11, S12) zu weiterverarbeiteten Empfängerausgangssignalen (S1φ, S1a) und daraus zu Kompensatorspeisesignalen (S31, S32),
- Gewinnen einer Information über die Übertragungseigenschaften der ersten Übertragungsstrecke aus den Empfängerausgangssignalen (S11, S12), die an Ausgängen (300a, 300c) anliegen;

wobei das Gewinnen der Information aus den Empfängerausgangssignalen (S11, S12) die weiteren Schritte umfasst:

- Addieren der beiden Empfängerausgangssignale (S11, S12) zu einem weiterverarbeiteten Empfängerausgangssignal (S1a);
- Subtrahieren der beiden Empfängerausgangssignale (S11, S12) zu einem anderen weiterverarbeiteten Empfängerausgangssignal (S1φ);
- Multiplizieren des einen weiterverarbeiteten Empfängerausgangssignals (S1a) mit dem einen Generator-Signal (S5a) und Bilden eines Detektionssignals (S10a);
- Multiplizieren des anderen weiterverarbeiteten Empfängerausgangssignals (S1φ) mit dem anderen Generator-Signal (S5φ) und Bilden eines anderen Detektionssignals (S10φ);

- Filtern des einen Detektionssignals (S10a) in einem Filter (209a) und Verstärken mittels eines Verstärkers (211a) zu einem Ausgangssignal (S4a) an dem einen Ausgang (300a);
- Filtern des anderen Detektionssignals (S10φ) in einem Filter (209b) zu einem Filterausgangssignal Fφ[S10φ] an dem anderen Ausgang (300c);

wobei aus dem einen Ausgangssignal (S4a) und dem Filterausgangssignal Fφ[S10φ] sich die Dämpfungen bei der ersten und zweiten Wellenlänge ($\lambda_1$, $\lambda_2$) bestimmen lassen.

9. Verfahren nach dem vorhergehenden Anspruch, **dadurch gekennzeichnet, dass** der Schritt Weiterverarbeitung der Empfängerausgangssignale (S11, S12) zu Kompensatorspeisesignalen (S31, S32) folgende weitere Teilschritte umfasst:

- Durchführen einer zumindest teilweisen Rücktransformation der Ausgangssignale (S4φ, S4a) mit den Generator-Signalen (S5φ, S5a) derart, dass Vorsignale (S6φ, S6a) gebildet werden, wobei die Rücktransformationen Multiplikationen sind;
- Erzeugen der Kompensatorspeisesignale (S31, S32) aus den Vorsignalen (S6φ, S6a);
- Speisen des Kompensationssenders (205) mit den Kompensationssignalen (S31, S32) zur rückkoppelnden Regelung der Empfängerausgangssignale (S11, S12).

10. Verfahren nach einem der vorhergehenden Ansprüche 8 oder 9, **dadurch gekennzeichnet, dass**

- die Wellenlängen-Teilbereiche einer Farbe entsprechen;
- zwei separate Farbsignale ausgesendet werden;
- die Regelung der beiden Farbsignale gegenläufig erfolgen kann, bevorzugt ein Umschalten mittels eines Umschalters zwischen den beiden Farbsignalen ist, so dass zu jedem Zeitpunkt vorwiegend wenigstens ein Farbsignal ausgesendet wird;
- die Intensität der zwei Farbsignale mittels der Empfänger (D1, D2) erfasst wird; und
- die auf den zwei Farbsignalen beruhenden Empfängerausgangssignale (S11, S12) weiterverarbeitet werden.

11. Verfahren nach einem der vorhergehenden Ansprüche 8 bis 10, **dadurch gekennzeichnet, dass** die zwei Sendeelemente (H1, H2) je ein Farbsignal aussenden und abwechselnd aktiv sind, wobei die Sendeelemente (H1, H2) bevorzugt lichtemittierende Dioden (LED) sind.

12. Sensorsystem nach einem der Ansprüche 1 bis 7 oder Verfahren nach einem der Ansprüche 8 bis 11, **dadurch gekennzeichnet, dass** das eine Generatorspeisesignal (S51) durch Addition der Generator-Signale (S5φ, S5a) gebildet und dass das andere Generatorspeisesignal (S52) durch Subtraktion der Generator-Signale (S5φ, S5a) gebildet wird.

## Claims

1. Sensor system with at least one transmitter (200) and receivers (204; D1, D2) for measuring the transmission properties of a first transmission path between a transmitter (200) and the receivers (D1, D2), wherein

   - the transmitter (200) comprises two transmission elements (H1, H2) to each of which a wavelength ($\lambda_1$, $\lambda_2$) is assigned and which are each fed by a generator supply signal (S51, S52) of two generators (G1, G2), wherein the generator supply signals (S51, S52) are formed from generator signals (S5φ, S5a) generated by the generators (G1, G2),
   - the transmitter (200) is configured and arranged to transmit transmission signals into the first transmission path, which are detected by the receivers (D1, D2) after passing through at least part of the first transmission path,
   - the receivers (D1, D2) are configured and arranged to receive the transmission signals (S25, S200) and form receiver output signals (S11, S12) therefrom,
   - a processing unit (120) is configured and arranged to further process the receiver output signal (S11, S12) and to obtain information on the properties of the first transmission path, **characterized in that**
   - the transmitter (200) can emit at least part of the spectrum of electromagnetic radiation in at least two predetermined wavelength subregions, wherein the emission intensity of the at least two wavelength subregions can be regulated, in particular in opposite directions, by means of at least one signal so that the radiation of the at least two wavelength subregions can be emitted in a ratio specified by the regulation;
   - the receivers (D1, D2) are spectrally differently sensitive;
   - the processing unit (120) further processes the receiver output signals (S11, S12), which are based on the at least two wavelength subregions, and therefrom obtains information on the transmission properties;
   - a compensation transmitter (205) comprises two compensation transmission elements (K1, K2) that transmit a compensation signal (S23) into a second transmission path, which compensation signal is detected by the receivers (D1, D2) after passing through the second transmission path,
   - the receivers (D1, D2) receive the transmission signals (S25, S200) and the compensation signal (S23), superimpose them, in particular linearly and/or by summing them up, and form the receiver output signals (S11, S12) therefrom,
   - the processing unit (120) further processes the receiver output signals (S11, S12) into two compensator supply signals (S31, S32),
   - the processing unit (120) feeds the compensation transmitter (205) with the compensator supply signals (S31, S32), and
   - the processing unit (120) conducts a feedback control of the receiver output signals (S11, S12) with the compensator supply signals (S31, S32) in order to establish information on the transmission properties of the transmission path, wherein
   - the one receiver output signal (S11) and the other receiver output signal (S12) are added up to a further processed receiver output signal (S1a) which is multiplied by the one generator signal (S5a) and forms a detection signal (S10a), which is filtered by means of a filter (209a) and amplified by means of an amplifier (211a) and which abuts an exit (300a) of the processing unit (120) as an output signal (S4a),
   - the one receiver output signal (S11) and the other receiver output signal (S12) are subtracted to another further processed receiver output signal (S1φ), which is multiplied by the other generator signal (S5φ) and forms another detection signal (S10φ) that is filtered by means of a filter (209b) and abuts another exit (300c) of the processing unit (120) as filter output signal Fφ[S10φ],

   wherein the filter output signal Fφ[S10φ] is amplified to another output signal (S4φ) and
   wherein the attenuations of the first and second wavelength ($\lambda_1$, $\lambda_2$) can be determined from the one output signal (S4a) and the filter output signal Fφ[S10φ].

2. Sensor system according to the preceding claim, **characterized in that** the emission intensity of the at least two wavelength subregions ($\lambda_1$, $\lambda_2$) is regulated in the same direction by means of at least one further signal so that the radiation of the at least two wavelength subregions ($\lambda_1$, $\lambda_2$) is emitted with an overall intensity specified by the regulation.

3. Sensor system according to any one of the preceding claims, **characterized in that** the transmitter (200) emits electromagnetic radiation in more than two

wavelength subregions ($\lambda_1$, $\lambda_2$), preferably with an intensity that can be regulated in a wavelength range-specific manner.

4. Sensor system according to any one of the preceding claims, **characterized in that**

    - the wavelength subregions correspond to a color and
    - the transmitter can emit two separate color signals ($\lambda_1$, $\lambda_2$), wherein it is switched between the two color signals ($\lambda_1$, $\lambda_2$) by means of a counter-regulation, preferably a switch, so that at least one color signal is emitted at all times;
    - the spectrally differently sensitive receivers (D1, D2) are suitable for determining the intensity of the two color signals ($\lambda_1$, $\lambda_2$).

5. Sensor system according to any one of the preceding claims, **characterized in that** the transmission elements (H1, H2) of the transmitter (200) emit a constant luminous flux for each wavelength subregion ($\lambda_1$, $\lambda_2$), in particular each color signal, in such a manner that the amount of energy emitted is essentially the same as the sum of the radiation of all the transmission elements (H1, H2) or that the sum of the receiver signal amplitudes is essentially the same.

6. Sensor system according to any one of the preceding claims, **characterized in that** the receiver (204) comprises at least two, preferably at least four receiving elements (D1, D2), each having a different spectral sensitivity profile, wherein the receiving elements preferably are spectrally differently sensitive photodiodes or other diodes or LEDs.

7. Sensor system according to any one of the preceding claims, **characterized in that** the receiver (204) is sensitive in the range of visible and IR radiation and the partial wavelength subregions are between a wavelength of 380 nm to 1100 nm.

8. Method for measuring the transmission properties of a first transmission path of a measurement system (1) based on feedback compensation between at least one transmitter (200) with two transmission elements (H1, H2), to each of which a wavelength ($\lambda_1$, $\lambda_2$) is assigned and which are each fed by a generator supply signal (S51, S52) of two generators (G1, G2), and receivers (204; D1, D2), wherein

    - the generator supply signals (S51, S52) are formed from generator signals (S5$\varphi$, S5a) generated by the generators (G1, G2),
    - the transmitter (200) transmits transmission signals into the transmission path, which are detected by the receivers (D1, D2) after passing through at least part of the first transmission path,
    - a compensation transmitter (205) with two compensation transmission elements (K1, K2) transmits compensation signals into a second transmission path, which are detected by the receivers (D1, D2) after passing through the second transmission path,
    - in the receivers (D1, D2), the transmission signals and compensation signals are superimposed linearly, in particular by summing them up, and receiver output signals (S11, S12) are formed therefrom,
    - the receiver output signals (S11, S12) are further processed to compensator supply signals (S31, S32) for feeding the compensation transmitter (205);
    - the compensator supply signals (S31, S32) are fed to the compensation transmitter (205) for feedback control of the receiver output signals (S11, S12);

**characterized by** the following steps:

    - emitting at least part of the spectrum of electromagnetic radiation in at least two specified wavelength subregions by means of the transmitter (200);
    - regulating the emission intensity in the at least two partial wavelength sub-regions by means of at least one signal so that radiation of the at least two partial wavelength subregions is also emitted in a ratio essentially specified by the regulation,
    - receiving at least the electromagnetic radiation by means of the receivers (D1, D2) which are spectrally differently sensitive;
    - forming receiver output signals (S11, S12);
    - further processing of the receiver output signals (S11, S12) to further processed receiver output signals (S1$\varphi$, S1a) and therefrom to compensator supply signals (S31, S32),
    - obtaining information on the transmission properties of the first transmission path from the receiver output signals (S11, S12) which abut on exits (300a, 300c);

wherein the obtaining of information from the receiver output signals (S11, S12) comprises the further steps:

    - summing up the two receiver output signals (S11, S12) to a further processed receiver output signal (S1a);
    - subtracting the two receiver output signals (S11, S12) to another further processed receiver output signal (S1$\varphi$);
    - multiplying the one further processed receiver output signal (S1a) by the one generator signal (S5a) and forming a detection signal (S10a);
- multiplying the other further processed receiver output signal (S1φ) by the other generator signal (S5φ) and forming another detection signal (S10φ);
- filtering the one detection signal (S10a) in a filter (209a) and amplifying it at the one exit (300a) to an output signal (S4a) by means of an amplifier (211a);
- filtering the other detection signal (S10φ) in a filter (209b) at the other exit (300c) to a filter output signal Fφ[S10φ];

wherein the attenuations of the first and second wavelength ($\lambda_1$, $\lambda_2$) can be determined from the one output signal (S4a) and the filter output signal Fφ[S10φ].

9. Method according to the preceding claim, **characterized in that** the step of further processing the receiver output signals (S11, S12) to compensator supply signals (S31, S32) comprises the following further substeps:

- performing an at least partial reverse transformation of the output signals (S4cp, S4a) by the generator signals (S5cp, S5a) in such a manner that pre-signals (S6cp, S6a) are formed, the reverse transformation being multiplications;
- generating the compensator supply signals (S31, S32) from the pre-signals (S6φ, S6a);
- feeding the compensation transmitter (205) with the compensator supply signals (S31, S32) for feedback control of the receiver output signals (S11, S12).

10. Method according to any one of the preceding claims 8 or 9, **characterized in that**

- the partial wavelength subregions correspond to a color;
- two separate color signals are transmitted;
- the regulation of the two color signals can take place in opposite directions, preferably with a switching between the two color signals by means of a switch, so that predominantly at least one color signal is emitted at all times;
- the intensity of the two color signals is determined by means of the receivers (D1, D2); and
- the receiver output signals (S11, S12) based on the two color signals are further processed.

11. Method according to any one of the preceding claims 8 to 10, **characterized in that** the two transmission elements (H1, H2) each emit one color signal and are active alternately, wherein the transmission elements (H1, H2) preferably are light-emitting diodes (LEDs).

12. Sensor system according to any one of the claims 1 to 7 or method according to any one of the claims 8 to 11, **characterized in that** the one generator supply signal (S51) is formed by summing up the generator signals (S5φ, S5a) and **in that** the other generator supply signal (S52) is formed by subtracting the generator signals (S5φ, S5a).

**Revendications**

1. Système de capteur comportant au moins un émetteur (200) et des récepteurs (204 ; D1, D2) pour mesurer les propriétés de transmission d'une première voie de transmission entre un émetteur (200) et les récepteurs (D1, D2),

- l'émetteur (200) comprenant deux éléments d'émission (H1, H2) à chacun desquels est associée une longueur d'onde ($\lambda_1$, $\lambda_2$) et qui sont alimentés par respectivement un signal d'alimentation de générateur (S51, S52) de deux générateurs (G1, G2), les signaux d'alimentation de générateur (S51, S52) étant formés par des signaux de générateur (S5φ, S5a) générés par les générateurs (G1, G2),
- l'émetteur (200) étant conçu et configuré pour envoyer dans la première voie de transmission des signaux d'émission qui sont détectés par les récepteurs (D1, D2) après passage par au moins une partie de la première voie de transmission,
- les récepteurs (D1, D2) étant conçus et configurés pour recevoir les signaux d'émission (S25, S200) et former sur cette base des signaux de sortie de récepteur (S11, S12),
- une unité de traitement (120) étant conçue et configurée pour le traitement subséquent des signaux de sortie de récepteur (S11, S12) et pour l'obtention d'une information sur les propriétés de la première voie de transmission, **caractérisé en ce que**
- l'émetteur (200) peut émettre au moins une partie du spectre de rayonnement électromagnétique dans au moins deux plages partielles de longueur d'onde données, l'intensité d'émission des au moins deux plages partielles de longueur d'onde pouvant être réglée à l'aide d'au moins un signal, et plus particulièrement en sens contraire, de sorte que le rayonnement des au moins deux plages partielles de longueur d'onde est émis selon un rapport spécifié par le réglage ;
- les récepteurs (D1, D2) ont une sensibilité spectrale différente ;
- l'unité de traitement (120) traite ensuite les signaux de sortie de récepteur (S11, S12) reposant sur les au moins deux plages partielles de longueur d'onde et en tire une information sur les propriétés de transmission ;

- un émetteur de compensation (205) comporte deux éléments d'émission de compensation (K1, K2) qui envoient dans une deuxième voie de transmission un signal de compensation (S23) qui est détecté par les récepteurs (D1, D2) après passage par la deuxième voie de transmission,

- les récepteurs (D1, D2) reçoivent les signaux d'émission (S25, S200) et le signal de compensation (S23), les superposent, en particulier linéairement et/ou en les additionnant, et forment sur cette base les signaux de sortie de récepteur (S11, S12),

- l'unité de traitement (120) traite ensuite les signaux de sortie de récepteur (S11, S12) pour obtenir deux signaux d'alimentation de compensateur (S31, S32),

- l'unité de traitement (120) amène les signaux d'alimentation de compensateur (S31, S32) à l'émetteur de compensation (205) et

- l'unité de traitement (120), avec les signaux d'alimentation de compensateur (S31, S32), effectue un réglage par rétroaction des signaux de sortie de récepteur (S11, S12) pour ainsi déterminer des informations sur les propriétés de transmission de la voie de transmission,

l'un signal de sortie de récepteur (S11) étant additionné avec l'autre signal de sortie de récepteur (S12) pour obtenir un signal de sortie de récepteur (S1a) ayant subi un traitement subséquent, lequel est multiplié par l'un signal de générateur (S5a) et forme un signal de détection (S10a) qui est filtré au moyen d'un filtre (209a) et est amplifié au moyen d'un amplificateur (211a) et est appliqué en tant que signal de sortie (S4a) à une sortie (300a) de l'unité de traitement (120),

l'un signal de sortie de récepteur (S11) et l'autre signal de sortie de récepteur (S12) étant soustraits pour obtenir un autre signal de sortie de récepteur (S1φ) ayant subi un traitement subséquent, lequel est multiplié par l'autre signal de générateur (S5φ) et forme un autre signal de détection (S10 φ) qui est filtré au moyen d'un filtre (209b) et est appliqué en tant que signal de sortie de filtre Fφ[S10φ] à une autre sortie (300c) de l'unité de traitement (120),

le signal de sortie de filtre Fφ[S10φ] étant amplifié pour obtenir un autre signal de sortie (S4φ) et

les atténuations au niveau de la première et de la deuxième longueur d'onde ($\lambda_1$, $\lambda_2$) pouvant être déterminées à partir de l'un signal de sortie (S4a) et du signal de sortie de filtre Fφ[S10φ].

2. Système de capteur selon la revendication précédente, **caractérisé en ce que** l'intensité d'émission des au moins deux plages partielles de longueur d'onde ($\lambda_1$, $\lambda_2$) est réglée dans le même sens à l'aide d'au moins un autre signal, de sorte que le rayonnement des au moins deux plages partielles de longueur d'onde ($\lambda_1$, $\lambda_2$) est émis avec une intensité totale spécifiée par le réglage.

3. Système de capteur selon l'une des revendications précédentes, **caractérisé en ce que** l'émetteur (200) émet un rayonnement électromagnétique dans plus de deux plages partielles de longueur d'onde ($\lambda_1$, $\lambda_2$), de préférence avec une intensité commandable de manière spécifique à la plage de longueur d'onde.

4. Système de capteur selon l'une des revendications précédentes, **caractérisé en ce que**

- les plages partielles de longueur d'onde correspondent à une couleur et
- l'émetteur peut émettre deux signaux de couleur distincts ($\lambda_1$, $\lambda_2$), le réglage étant inversé au moyen d'un réglage en sens contraire, de préférence au moyen d'un commutateur, entre les deux signaux de couleur ($\lambda_1$, $\lambda_2$), de sorte qu'à chaque instant est émis au moins un signal de couleur ;
- les récepteurs (D1, D2) de sensibilité spectrale différente étant adaptés pour détecter l'intensité des deux signaux de couleur ($\lambda_1$, $\lambda_2$).

5. Système de capteur selon l'une des revendications précédentes, **caractérisé en ce que** les éléments d'émission (H1, H2) de l'émetteur (200) émettent, pour chaque plage de longueur d'onde ($\lambda_1$, $\lambda_2$), et plus particulièrement pour chaque signal de couleur, un flux lumineux constant de telle sorte que la quantité d'énergie émise est sensiblement égale à la somme du rayonnement de tous les éléments d'émission (H1, H2) ou que la somme des amplitudes de signal de récepteur est sensiblement égale.

6. Système de capteur selon l'une des revendications précédentes, **caractérisé en ce que** le récepteur (204) comprend au moins deux, préférentiellement au moins quatre éléments de réception (D1, D2) qui présentent respectivement un autre profil de sensibilité spectrale, les éléments de réception étant de préférence des photodiodes ou d'autres diodes ou des DEL de sensibilité spectrale différente.

7. Système de capteur selon l'une des revendications précédentes, **caractérisé en ce que** le récepteur (204) est sensible dans la plage du rayonnement visible et IR et les plages partielles de longueur d'onde se trouvent entre une longueur d'onde de 380 nm à 1100 nm.

8. Procédé de mesure des propriétés de transmission d'une première voie de transmission d'un système de mesure (1) reposant sur une compensation par rétroaction entre au moins un émetteur (200) avec deux éléments d'émission (H1, H2) à chacun desquels est associée une longueur d'onde ($\lambda_1$, $\lambda_2$) et qui sont alimentés par respectivement un signal d'alimentation de générateur (S51, S52) de deux générateurs (G1, G2), et des récepteurs (204 ; D1, D2),

- les signaux d'alimentation de générateur (S51, S52) étant formés à partir de signaux de générateur (S5$\varphi$, S5a) générés par les générateurs (G1, G2),
- l'émetteur (200) envoyant dans la voie de transmission des signaux d'émission qui sont détectés par les récepteurs (D1, D2) après passage par au moins une partie de la première voie de transmission,
- un émetteur de compensation (205) comportant deux éléments d'émission de compensation (K1, K2) envoyant dans une deuxième voie de transmission des signaux de compensation qui sont détectés par les récepteurs (D1, D2) après passage par la deuxième voie de transmission,
- dans les récepteurs (D1, D2) les signaux d'émission et les signaux de compensation se superposant linéairement, en particulier en s'additionnant, et des signaux de sortie de récepteur (S11, S12) étant formés sur cette base,
- les signaux de sortie de récepteur (S11, S12) étant traités subséquemment pour obtenir des signaux d'alimentation de compensateur (S31, S32) pour alimenter l'émetteur de compensation (205),
- les signaux d'alimentation de compensateur (S31, S32) étant amenés à l'émetteur de compensation (205) pour le réglage par rétroaction des signaux de sortie de récepteur (S11, S12),

**caractérisé par** les étapes suivantes :

- émission, au moyen de l'émetteur (200), d'au moins une partie du spectre de rayonnement électromagnétique dans au moins deux plages partielles de longueur d'onde données ;
- réglage de l'intensité d'émission dans les au moins deux plages partielles de longueur d'onde à l'aide d'au moins un signal, de sorte que le rayonnement des au moins deux plages partielles de longueur d'onde est émis selon un rapport sensiblement spécifié par le réglage ;
- réception au moins du rayonnement électromagnétique au moyen des récepteurs (D1, D2), qui ont une sensibilité spectrale différente ;
- formation de signaux de sortie de récepteur (S11, S12) ;
- traitement subséquent des signaux de sortie de récepteur (S11, S12) pour obtenir des signaux de sortie de récepteur ayant subi un traitement subséquent (S1$\varphi$, S1a) et, sur cette base, des signaux d'alimentation de compensateur (S31, S32) ;
- obtention d'une information sur les propriétés de transmission de la première voie de transmission à partir des signaux de sortie de récepteur (S11, S12) qui sont appliqués aux sorties (300a, 300c) ;

l'obtention de l'information à partir des signaux de sortie de récepteur (S11, S12) comprenant les étapes suivantes :

- addition des deux signaux de sortie de récepteur (S11, S12) pour obtenir un signal de sortie de récepteur (S1a) ayant subi un traitement subséquent ;
- soustraction des deux signaux de sortie de récepteur (S11, S12) pour obtenir un autre signal de sortie de récepteur (S1$\varphi$) ayant subi un traitement subséquent ;
- multiplication de l'un signal de sortie de récepteur (S1a) ayant subi un traitement subséquent par l'un signal de générateur (S5a) et formation d'un signal de détection (S10a) ;
- multiplication de l'autre signal de sortie de récepteur (S1$\varphi$) ayant subi un traitement subséquent par l'autre signal de générateur (S5$\varphi$) et formation d'un autre signal de détection (S10$\varphi$) ;
- filtrage de l'un signal de détection (S10a) dans un filtre (209a) et amplification au moyen d'un amplificateur (211a) pour obtenir un signal de sortie (S4a) à l'une sortie (300a) ;
- filtrage de l'autre signal de détection (S10$\varphi$) dans un filtre (209b) pour obtenir un signal de sortie de filtre F$\varphi$[S10$\varphi$] à l'autre sortie (300c) ;

les atténuations au niveau de la première et de la deuxième longueur d'onde ($\lambda_1$, $\lambda_2$) pouvant être déterminées à partir de l'un signal de sortie (S4a) et du signal de sortie de filtre F$\varphi$[S10$\varphi$].

9. Procédé selon la revendication précédente, **caractérisé en ce que** l'étape de traitement subséquent des signaux de sortie de récepteur (S11, S12) pour obtenir des signaux d'alimentation de compensateur (S31, S32) comprend les sous-étapes suivantes :

- exécution d'une transformation inverse au moins partielle des signaux de sortie (S4$\varphi$, S4a) avec les signaux de générateur (S5$\varphi$, S5a) de telle sorte que des signaux préalables (S6$\varphi$, S6a) sont formés, les transformations inverses étant des multiplications ;
- génération des signaux d'alimentation de compensateur (S31, S32) à partir des signaux préalables (S6$\varphi$, S6a) ;

- alimentation de l'émetteur de compensation (205) avec les signaux de compensation (S31, S32) pour le réglage par rétroaction des signaux de sortie de récepteur (S11, S12).

10. Procédé selon l'une des revendications précédentes 8 ou 9,
**caractérisé en ce que** :

- les plages partielles de longueur d'onde correspondent à une couleur ;
- deux signaux de couleur distincts sont émis ;
- le réglage des deux signaux de couleur peut être en sens contraire et est de préférence inversé au moyen d'un commutateur entre les deux signaux de couleur, de sorte qu'à chaque instant est émis essentiellement au moins un signal de couleur ;
- l'intensité des deux signaux de couleur est détectée au moyen des récepteurs (D1, D2) et
- les signaux de sortie de récepteur (S11, S12) reposant sur les deux signaux de couleur sont traités subséquemment.

11. Procédé selon l'une des revendications précédentes 8 à 10, **caractérisé en ce que** les deux éléments d'émission (H1, H2) émettent respectivement un signal de couleur et sont actifs en alternance, les éléments d'émission (H1, H2) étant préférentiellement des diodes électroluminescentes (DEL).

12. Système de capteur selon l'une des revendications 1 à 7 ou procédé selon l'une des revendications 8 à 11, **caractérisé en ce que** l'un signal d'alimentation de générateur (S51) est formé par addition des signaux de générateur (S5$\varphi$, S5a) et **en ce que** l'autre signal d'alimentation de générateur (S52) est formé par soustraction des signaux de générateur (S5$\varphi$, S5a).

Fig. 1    Prior Art

B1

G1

S6

S3

S5

202, 205

200

S23

201, 203

S25

T1

S5

S5

S5

S5

S5

S5

S9

S10

S4

S1

204

107

208

209

211

212

120

300

Fig. 2

20

Fig. 3

Fig. 4

EP 2 679 982 B1